# EUROPEAN PATENT APPLICATION

(11) **EP 4 848 087 A1**
(43) Date of publication of application: **02.12.2026**
(21) Application number: 25179878.1
(22) Date of filing: 30.05.2025
(51) Int. Cl.: G06F 9/50

(54) **MANAGING USAGE OF ARTIFACTS ON A CLOUD COMPUTING SYSTEM IN REAL-TIME**

(71) Applicant: Siemens Aktiengesellschaft, 80333 München (DE)
(72) Inventor: PANDIT, Amit, 411052 Pune, Maharashtra (IN)
(74) Representative: HKW Intellectual Property PartG mbB

(57) **Abstract**

The invention relates to an apparatus and method for managing usage of artifacts on a cloud computing system by one or more tenants in real-time. The method comprises detecting an event associated with at least one asset (108A-N, 114). The event is ingestion of usage data associated with utilization of at least one artifact deployed on the cloud computing system (102) by the asset, into a primary usage data store (124). Upon detecting the event, a virtual machine instance is provisioned on the cloud computing system. Further, a usage metric based on the usage data ingested into the primary usage data store (124) is aggregated using the virtual machine instance provisioned. The aggregated usage metric is further ingested into an aggregated usage data store (125). Further, a notification is transmitted to a user device (114) upon ingesting the aggregated usage metric into the aggregated usage data store (125).

## Description

The present invention generally relates to the field of cloud computing system, and more particularly to a method and system for managing usage of artifacts on a cloud computing system by one or more tenants, in real-time.

In modern cloud computing environments, software services are increasingly delivered through multi-tenant, distributed systems. These systems host multiple applications, each of which may serve a variety of customers (tenants). A common requirement in such environments is the ability to track and bill customers based on their usage of application-specific resources or services. Each application may define its own set of usage metrics, which are used to determine billing amounts for each customer.

Traditionally, usage data is collected and aggregated at fixed intervals, such as daily or monthly, and billing is performed based on these aggregated values. However, this approach introduces several limitations. First, the delay between usage and aggregation prevents customers from receiving timely feedback on their consumption, which can lead to unintentional overuse of resources. This is particularly problematic in scenarios where specific assets incur significant costs upon onboarding or usage, and customers need to monitor their consumption closely to avoid exceeding predefined limits.

Moreover, in the absence of near real-time usage visibility, applications are unable to notify customers promptly about potential over-usage. This can result in disputes over billing, especially when customers are charged for usage that exceeds their purchased limits without having had the opportunity to take corrective action. Such billing disputes can erode customer trust and satisfaction.

Furthermore, conventional aggregation mechanisms often operate on provisioned servers regardless of actual usage. This leads to unnecessary compute cycles being consumed even when no new usage data is present, resulting in inefficient resource utilization and increased operational costs. From an environmental perspective, this inefficiency contributes to a larger carbon footprint, which is increasingly a concern for cloud service providers and their customers.

In light of the above, there exists a need to manage usage of artifacts on a cloud computing system by one or more tenants in real-time, for providing real-time usage visibility.

Therefore, it is an object of the present invention to provide an apparatus and a method for managing usage of artifacts on a cloud computing system by one or more tenants in real-time.

The apparatus includes one or more processing units and at least one memory unit communicatively coupled to the one or more processing units, wherein the at least one memory unit comprises a usage management module stored in the form of machine-readable instructions executable by the one or more processing units for detecting an event associated with at least one asset communicatively coupled to the cloud computing platform. The event is ingestion of usage data associated with utilization of the at least one artifact deployed on the cloud computing system by the asset, into a primary usage data store and the at least one asset is associated with a tenant of the cloud computing system. The usage data is indicative of a cost of consumption of the at least one artifact by the at least one asset. Advantageously, the present invention uses an event-driven architecture for real-time usage data aggregation unlike traditional cloud systems that aggregate at fixed intervals-architecture for usage data aggregation within multi-tenant cloud computing systems. This event-driven approach allows for real-time responsiveness to usage data ingestion.

The apparatus is configured for triggering provisioning of a virtual machine instance on the cloud computing system, upon detecting the event. Further, a usage metric based on the usage data ingested into the primary usage data store is aggregated using the virtual machine instance provisioned. Advantageously, the present invention triggers aggregation processes only when usage data is ingested for active tenants, unlike traditional systems which schedule bulk aggregations at fixed intervals without consideration for real-time data ingestion.

The apparatus is further configured for aggregating a usage metric based on the usage data ingested into the primary usage data store using the virtual machine instance provisioned. In an embodiment, in aggregating the usage metric based on the usage data ingested into the primary usage data store using the virtual machine instance provisioned, the apparatus is configured for deploying and executing, on the virtual machine instance, a set of instructions for aggregating the usage metric. In a further embodiment, in deploying and executing, on the virtual machine instance, a set of instructions for aggregating the usage metric, the apparatus is further configured for determining at least one attribute associated corresponding to the usage data. Further, the set of instructions to be deployed and executed on the virtual machine instance is identified from a repository, based on the at least one attribute. In an embodiment, the attribute is indicative of at least one of a tenant identifier and an artifact identifier. In a further embodiment, the virtual machine instance is deprovisioned upon aggregating the usage metric based on the usage data. Advantageously, the virtual machine instance is provisioned and deprovisioned for the time duration in which the aggregation of the usage data is performed. Consequently, a cost to the tenant, associated with utilization of compute resources is optimized, as compared to traditional approaches which maintain compute resources active for a longer period of time, forcing the tenant to pay for the compute resources even for durations in which the compute resources are dormant or unutilized.

The apparatus is further configured for ingesting the aggregated usage metric into an aggregated usage data store. Advantageously, the aggregated usage data stores real-time usage metrics of the tenant as opposed to fixed interval architectures which do not provide updated usage metrics in real-time.

The apparatus is further configured for transmitting a notification to the user device upon ingesting the aggregated usage metric into the aggregated usage data store, wherein the aggregated usage data store enables the user device to access the aggregated usage metric in real-time via a user interface. In an embodiment, in transmitting a notification to the user device upon ingesting the aggregated usage metric into the aggregated usage data store, the apparatus is further configured for receiving a request for accessing the aggregated usage data store from the user interface. Further, an identity of the tenant based on the received request is authenticated. Upon successfully authenticating the identity of the tenant, the user device is provided access to the aggregated usage metric stored in the aggregated usage data store. Advantageously, the aggregated usage data store helps in enables tenants to view their real-time usage metrics by accessing the usage data store.

In an embodiment, the apparatus is further configured for performing one or more operations for controlling access of the at least one asset to the artifact based on the aggregated usage metric.

The object of the present invention is also achieved by a system comprising a cloud computing system, an apparatus as described above, communicatively coupled to the cloud computing system. The system further includes one or more assets communicatively coupled to the cloud computing system. Each of the assets is capable of accessing one or more artifacts deployed on the cloud computing system.

The object of the present invention is also achieved by a method including detecting, one or more processing units, an event associated with at least one asset communicatively coupled to the cloud computing system. The event is ingestion of usage data associated with utilization of at least one artifact deployed on the cloud computing system 102 by the asset and the at least one asset is associated with a tenant of the cloud computing system. The method further includes triggering provisioning of a virtual machine instance on the cloud computing system, upon detecting the event. The method further includes aggregating a usage metric based on the usage data ingested into the primary usage data store using the virtual machine instance provisioned. The method further includes ingesting the aggregated usage metric into an aggregated usage data store. The method further includes transmitting a notification to a user device upon ingesting the aggregated usage metric into the aggregated usage data store. The aggregated usage data store enables the user device to access the aggregated usage metric in real-time via a user interface.

The object of the present invention is also achieved by a computer program product comprising instructions which, when executed by the cloud computing system described above, cause the cloud computing system to carry out the method steps described above.

The above-mentioned and other features of the invention will now be addressed with reference to the accompanying drawings of the present invention. The illustrated embodiments are intended to illustrate but not limit the invention.

The present invention is further described hereinafter with reference to illustrated embodiments shown in the accompanying drawings, in which:
- FIG 1: is a block diagram of a cloud computing environment, according to an embodiment of the present invention;
- FIG 2: is a block diagram of a usage management module such as the one shown in FIG 1, according to an embodiment of the present invention;
- FIG 3: is a process flowchart depicting an exemplary method for managing usage of artifacts on a cloud computing system by one or more tenants in real-time, according to an embodiment of the present invention; and
- FIG 4: is a block diagram of an apparatus, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Throughout the specification, the terms 'cloud computing system' and 'cloud system' means the same. Also, the terms 'cloud computing platform' and 'cloud platform' means the same.

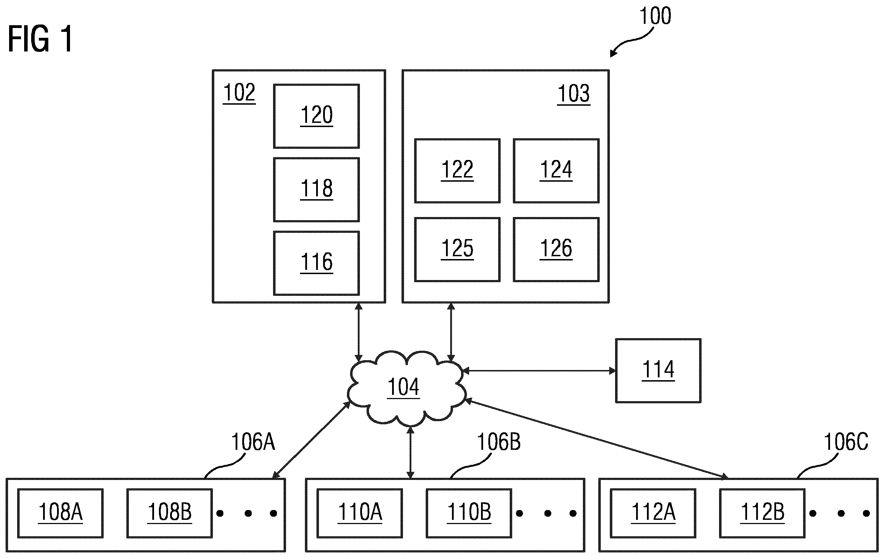

FIG 1 is a schematic representation of a system 100, according to an embodiment of the present invention. Particularly, FIG 1 depicts a cloud computing system 102 which is communicatively coupled to an apparatus 103 for managing usage of artifacts on the cloud computing system by one or more tenants. Exemplary artifacts may include applications (application for monitoring industrial plants), simulation models, engineering configuration, digital twin models, code snippets, APIs, security applications, firmware, microservices, and so on. The tenant may use one or more user devices 114 to access the cloud computing system 102 for managing and/or accessing the artifacts and accessing the cloud services. The tenant can be owner of assets in the industrial plant 106 who has subscribed to artifacts deployed on the cloud computing platform 120. The artifacts deployed on the cloud computing platform 120 may enable the tenants to commission the industrial plant 106, monitor and control the assets 108A-N in the industrial plant 106 and its operation, conduct maintenance of the industrial plants 106 and its assets 108A-N, configure an automation system in the industrial plant 106, monitor and control the automation system in the industrial plant 106 using various services provided by the cloud computing platform 120. Additionally, the artifact may enable the tenants to configure the assets 108A-N using the cloud services, onboard assets on to the cloud computing platform 120, send real-time raw plant data (e.g., operational data collected by sensors deployed in the industrial pant 106) to the cloud computing platform 120 via an IoT gateway, retrieve aggregated plant data from the cloud computing system 102, analyze the plant data or a specific condition, visualize the analyzed plant data, access digital twin models of assets, perform simulation of plant environment using digital twin models, manage IoT devices, download different versions of firmware, etc. using the cloud services provided by the cloud computing platform 120. The artifact may also be responsible for processing requests from the sub-tenants by invoking appropriate APIs and providing output to the tenants on the graphical user interface based on the execution of the APIs and its functions. In an embodiment, the user device 114 may also form part of the assets 108A-N.

In the present embodiment, the cloud computing system 102 is connected to assets 108A-N, assets 110A-N, assets 112A-N in the technical installation (e.g., industrial plant) 106A-N via a network 104 (e.g., Internet). The assets 108A-N, 110A-N, and 112A-N may include servers, robots, switches, automation devices, motors, valves, pumps, actuators, sensors, field devices and other industrial equipment. The artifacts may enable the one or more tenants to design, engineer, manufacture, commission, control, maintain the assets 108A-N, 110A-N, and 112A-N or industrial plants 106A-N. The cloud computing system 102 is also connected to at least one user device 114 via the network 104. The user device 114 may include laptop computer, workstation, desktop computer, tablet computer, smart phone and the like. The one or more tenants may use the user device 114 to access the artifact on the cloud computing system 102. The cloud computing system 102 may be hosted on a public cloud, private cloud, hybrid cloud and the like.

The cloud computing system 102 comprises a cloud communication interface 116, cloud computing hardware and OS 118 and a cloud computing platform 120. The cloud communication interface 116 enables communication between the cloud computing platform 120 and the industrial plants 106A-N. Also, the cloud communication interface 116 enables communication amongst the cloud computing platform 120, the apparatus 103 and the user device 114. The apparatus 103 includes a usage management module 122, at least one primary usage data store 124, at least one aggregated usage data store 125, and a database 126.

The cloud computing hardware and OS 118 may include one or more servers on which an operating system is installed and comprising one or more processing units, one or more storage devices for storing data, and other peripherals required for providing cloud computing functionality. The cloud computing platform 120 is a platform which implements functionalities such as data storage, data analysis, data visualization, data communication on the cloud computing hardware and OS 118 via APIs and algorithms; and manages the usage of artifacts that enable the aforementioned functionalities by executing the usage management module 122. In other words, the cloud computing platform 120 employs the usage management module 122 for providing seamless access to usage metrics associated with the artifacts, by respective tenants, on the cloud computing platform 120. The cloud computing platform 120 may comprise a combination of dedicated hardware and software built on top of the cloud hardware and OS 118.

The usage management module 122 is configured to detect an event associated with at least one of the assets 108A-N, 110A-N, 112A-N, 114 communicatively coupled to the cloud computing system 102. The event is ingestion of usage data associated with utilization of at least one artifact deployed on the cloud computing system 102 by the asset, into a primary usage data store. The at least one asset is associated with a tenant of the cloud computing system 102, as described earlier. The usage data is indicative of a cost of consumption of the at least one artifact, by the at least one asset. Upon detecting the event, provisioning of a virtual machine instance on the cloud computing system 102 is triggered. Further, a usage metric based on the usage data ingested into the primary usage data store 124 is aggregated using the virtual machine instance provisioned. The aggregated usage metric is ingested into an aggregated usage data store 125. Further, a notification is transmitted to the user device 114 upon ingesting the aggregated usage metric into the aggregated usage data store 125, in real-time via a user interface. The aggregated usage data store 125 enables the user device 114 to access the aggregated usage metric in real-time via a user interface. In an embodiment, the virtual machine instance is deprovisioned upon aggregating the usage metric based on the usage data. The use of virtual machine instances in this manner ensures that resources on the cloud computing system are not continuously used for monitoring the usage. Additionally, the usage management module 122 may also be configured to perform one or more operations for controlling access of the at least one asset to the artifact based on the aggregated usage metric.

The database 126 may comprise a repository for storing sets of instructions, a visualization database for storing visualization templates and so on. The primary usage data store 124 is a digital repository for storing the usage data associated with at least one artifact accessed by at least one tenant, in real-time. Similarly, the aggregated usage data store 125 is a digital repository for storing the usage data associated with at least one artifact accessed by at least one tenant accumulated over a predefined interval of time. In particular, each tenant may be assigned one or more usage data stores and one or more aggregated usage data stores.

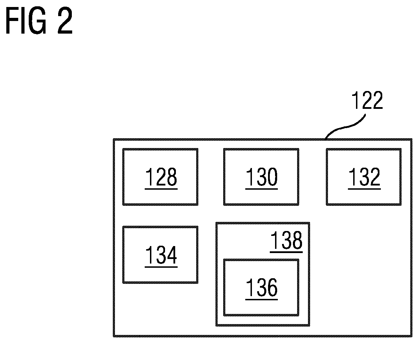

FIG 2 is a block diagram of the usage management module 122 such as those shown in FIG 1, according to an embodiment of the present invention. The usage management module 122 comprises an event detection module 128, a virtual machine (VM) provisioning module 130, a data aggregation module 132, a data ingestion module 134 and an access control module 136. In an embodiment, the access control module 136 also includes a usage control module 138.

The event detection module 128 is configured for detecting an event associated with at least one of the assets 108A-N, 110A-N, 112A-N, 114 communicatively coupled to the cloud computing system 102. The event is ingestion of usage data associated with utilization of at least one artifact deployed on the cloud computing system 102 by the asset, into a primary usage data store 124. The VM provisioning module 130 is configured for triggering provisioning of a virtual machine instance on the cloud computing system upon detecting the event. The term 'virtual machine instance' as used herein refers to a virtualized computing environment that emulates a physical computer, allowing it to run an operating system and applications as if it were a standalone machine.

The data aggregation module 132 is configured for computing an aggregated usage metric based on the usage data ingested into the primary usage data store 124 using the virtual machine instance provisioned. The virtual machine instance is deprovisioned upon aggregating the usage metric based on the usage data. The data ingestion module 134 is configured for ingesting the aggregated usage metric into the aggregated usage data store 125. The access control module 136 is configured for transmitting a notification to the user device 114 upon ingesting the aggregated usage metric into the aggregated usage data store 125. The aggregated usage data store 125 enables the user device 114 to access the aggregated usage metric in real-time via a user interface, such as a web interface on the user device 114. The usage control module 138 is configured for performing one or more operations for controlling access of the asset to the artifact based on the aggregated usage metric.

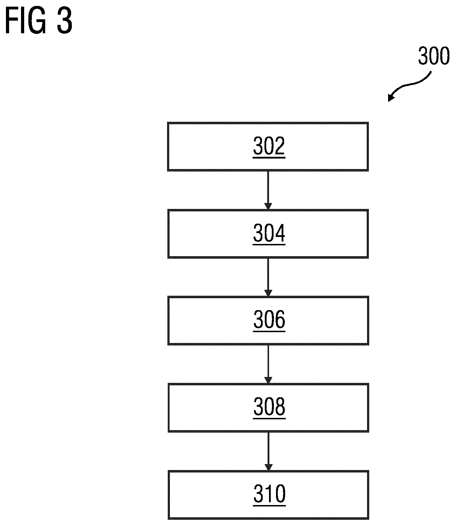

FIG 3 is a process flowchart 300 illustrating an exemplary method of managing usage of a cloud computing system by one or more tenants, in real-time, in accordance with an embodiment of the present invention. In an embodiment, the method 300 is implemented on the apparatus 103.

At step 302, an event associated with at least one asset, communicatively coupled to the cloud computing system. The event is ingestion of usage data associated with utilization of at least one artifact deployed on the cloud computing system by the asset, into a primary usage data store. The at least one asset is associated with a tenant of the cloud computing system. The usage data may include values corresponding to attributes such as, but not limited to, tenant identifier, subtenant identifier, artifact identifier, timestamp at which the artifact is accessed by the tenant, user activities such as pages accessed, user sessions etc., and specific usage parameters. The usage parameter is a quantifiable metric indicative of consumption of the at least one artifact, by the tenant. In an example, the artifact may be associated with providing storage services, the usage parameter may indicate a storage space utilized by the tenant at the specific instant. If the tenant takes up an additional 1 GB space in the storage space by storing a file at the specific instant, the usage parameter may indicate the updated storage space utilization of the tenant. In another example, the artifact may be associated with monitoring usage of an asset such as a sensor. The usage parameter may indicate the duration of usage of the asset. In yet another example, the artifact may be associated with providing translation services such as translation of files from one format to another. The usage parameter may indicate the number of times translation is performed for the tenant. In yet another example, the artifact may be associated with providing a user interface for creating CAD drawings. The usage parameter may indicate the number of parts used for creating a CAD drawing. Typically, a service provider who has deployed the artifact on the cloud computing system may charge the tenant for the utilization of the artifact based on the usage parameter. To enable detection of the event, the primary usage data store may be configured to generate a data ingestion alert using an application programming interface, when the usage data is written or ingested therein.

At step 304, a virtual machine instance is provisioned on the cloud computing system is triggered upon detecting the event. The virtual machine instance may be created and managed by a hypervisor on shared hardware. In particular, an instruction is transmitted to the cloud computing system for provisioning the virtual machine instance, in response to which the cloud computing system allocates and configures the necessary resources (compute, memory, storage, and networking) to bring a virtual machine instance into a functional state.

At step 306, a usage metric based on the usage data ingested into the primary usage data store is aggregated using the virtual machine instance provisioned. In an embodiment, computing the aggregated usage metric based on the usage data comprises determining at least one attribute associated corresponding to the usage data. In a further embodiment, the attribute is indicative of at least one of an identity of at least one of the tenant identifier and the artifact identifier. Further, the set of instructions to be executed on the virtual machine instance from a repository, based on the at least one attribute. This is because the usage parameters may be different based on contracts between tenants and service providers, and the appropriate set of instructions have to be selected to calculate the aggregated usage metric based on the specific usage parameter. The set of instructions identified from the repository are further deployed and executed on the virtual machine instance, to aggregate a usage metric. The usage metric is a cost associated with a value of the usage parameter, that is utilization of the artifact by the tenant.

In an embodiment, the aggregated usage metric is computed based on the usage data ingested and previously accumulated usage metric. For example, the set of instructions may be associated with computing a usage metric based on an overall use of the artifact by the tenant over a day. In another example, the set of instructions may be associated with computing a usage metric based on an overall use of the artifact by the tenant over a month. In an example, the set of instructions may perform summation of a usage metric corresponding to the ingested usage data, i.e., during a specific time interval, to a previously accumulated usage metric up until the beginning of the specific time interval. The previously accumulated usage metric may be retrieved from an aggregated usage data store. For example, if the previously accumulated usage metric corresponds to the time interval from 00:01 am to 14:30 pm, and the specific time interval is from 14:31 pm to 14:35 pm, the usage between 14:31 pm to 14:35 pm is added to the previously accumulated usage metric to update the usage metric of the artifact in the specific day. Similarly, the usage metric corresponding to a specific billing cycle (such as a month) may also be updated in real-time by adding the usage metric in the specific time interval to the previously accumulated usage metric in the billing cycle. In another implementation, if the tenant accesses two or more artifacts on the cloud computing system, the aggregated usage metric for the two or more artifacts by the tenant may be calculated using another set of instructions in a similar manner.

At step 308, the aggregated usage metric is ingested into an aggregated usage data store. In an embodiment, the aggregated usage metric and the usage metrics corresponding to previous instances to determine a trend associated with the usage of the at least one artifact by the tenant. In a preferred embodiment, the virtual machine instance is automatically deprovisioned upon aggregating the usage metric based on the usage data ingested into the primary usage data store. More specifically, once a predefined set of instructions for aggregation of the usage metric is executed, the virtual machine instance is automatically deprovisioned.

At step 310, a notification is transmitted to the user device upon ingesting the aggregated usage metric into the aggregated usage data store. The aggregated usage data store enables the user device to access the aggregated usage metric in real-time via a user interface. In an embodiment, access to the aggregated usage metric in the aggregated usage data store using an Application Programming Interface (API). In one implementation, the API fetches the aggregated usage data and provides visualization of the aggregated usage metrics on a web interface of a user device. In a further embodiment, enabling the tenant to access the aggregated usage metric comprises receiving a request for accessing the aggregated usage data store from the user interface. The request may be associated with accessing, for example, a monthly usage metric associated with the tenant. Further, an identity of the tenant based on the received request is authenticated. In an implementation, a tenant identifier in the request is checked against an authorized list of tenant identifiers. If the tenant identifier matches one of the authorized tenant identifiers, the identity of the tenant is authenticated. If not, the identity of the tenant is not authenticated, and the user interface may be configured to prompt the tenant to enter valid credentials indicative of the tenant identifier. Upon authenticating the identity of the tenant, access to the aggregated usage metric stored in the aggregated usage data store is provided.

In an implementation, the identity of the tenant may be authenticated by verifying whether a tenant identifier present in the request is the same as a tenant identifier corresponding to the aggregated usage data store. In another implementation, the tenant identifier in the request is used to check a look-up table to identify an address of the corresponding aggregated usage data store. Upon authenticating the identity of the tenant, access to the aggregated usage metric in the aggregated usage data store is provided. In one implementation, providing access may include using the identified address to execute a read operation for accessing the aggregated usage metric in the aggregated usage data store. Further, the aggregated usage metric is further published to the user interface via the application programming interface.

In an embodiment, one or more operations for controlling access of the asset to the artifact may be performed based on the aggregated usage metric. For example, if the usage metric corresponding to the aggregated usage metric exceeds a predefined threshold, access to the artifact on the cloud computing system may be restricted for the asset.

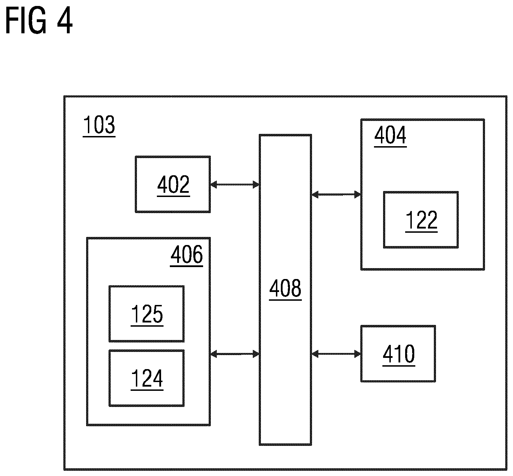

FIG 4 is a schematic representation of an apparatus 103, according to an embodiment of the present invention. The apparatus 103 comprises processing units 402, a memory unit 404, a storage unit 406, a communication interface 408, and an apparatus communication interface 410.

The processing units 402 may be one or more processor (e.g., servers). The processing units 402 are capable of executing machine-readable instructions stored on a computer-readable storage medium such as the memory unit 404 for performing one or more functionalities described in the foregoing description including but not limited to managing usage of artifacts on the cloud computing system 102, by one or more tenants in real-time. The memory unit 404 comprises the usage management module 122 stored in the form of machine-readable instructions and executable by the processing units 402.

The storage unit 406 can be volatile or non-volatile storage. In the preferred embodiment, the storage unit 406 comprises the primary usage data store 124 and the aggregated usage data store. The storage unit 406 may also comprise the database 126. The communication interface 408 acts as interconnect means between different components of the apparatus 103. The communication interface 408 may enable communication between the processing units 402, the memory unit 404 and the storage unit 406. The processing units 402, the memory unit 404 and the storage unit 406 may be located in same location or at different locations remote from the industrial plants 106A-N. The apparatus communication interface 410 is configured to establish and maintain communication links amongst the apparatus 103, the cloud computing system 102 and the user device 114.

Advantageously, the present invention employs an event-driven architecture for real-time usage data aggregation, unlike traditional cloud systems that aggregate at fixed intervals- architecture for usage aggregation within multi-tenant cloud systems. Unlike traditional systems which schedule bulk aggregations at fixed intervals without consideration for real-time data ingestion, the invention triggers aggregation processes only when relevant data is ingested for active tenants. This event-driven approach allows for real-time responsiveness, providing customers immediate feedback on their usage metrics.

Consequently, customers are empowered to monitor and control their application usage more efficiently, thus addressing the issues of delayed feedback and potential over-usage that are prevalent in conventional systems. The reduction in unnecessary compute cycles not only optimizes performance but also significantly decreases the carbon footprint associated with cloud operations. Further, virtual machine instances are provisioned upon detecting the event and deprovisioned once the aggregation of the usage data is complete. In other words, the invention ensures compute resources are activated solely, when necessary, further enhancing resource utilization and operational efficiency.

Those of ordinary skilled in the art will appreciate that the hardware depicted in FIG 4 may vary for specific implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

The present disclosure can take the form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of Reference

100 system
102 cloud computing system
103 apparatus
104 network
106 industrial plant
108A-N assets
110A-N assets
112A-N assets
114 user devices
116 cloud communication interface
118 cloud computing hardware and OS
120 cloud computing platform
122 usage management module
124 primary usage data store
125 aggregated usage data store
126 database
128 event detection module,
130 virtual machine (VM) provisioning module
132 data aggregation module
134 data ingestion module
136 access control module
138 usage control module
402 processing units
404 memory unit
406 storage unit
408 communication interface
410 apparatus communication interface

## Claims

1. An apparatus (103) for managing usage of artifacts on a cloud computing system (102) by one or more tenants, in real-time, comprising:
one or more processing units (402); and
at least one memory unit (404) communicatively coupled to the one or more processing units (402), wherein the at least one memory unit (404) comprises a usage management module (122) stored in the form of machine-readable instructions executable by the one or more processing units (402), for:
detecting an event associated with at least one asset (108A-N, 114) communicatively coupled to the cloud computing system (102), wherein the event is ingestion of usage data associated with utilization of at least one artifact deployed on the cloud computing system (102) by the asset, into a primary usage data store (124), and wherein the at least one asset (108A-N, 114) is associated with a tenant of the cloud computing system (102);
upon detecting the event, triggering provisioning of a virtual machine instance on the cloud computing system (102);
aggregating a usage metric based on the usage data ingested into the primary usage data store (124) using the virtual machine instance provisioned;
ingesting the aggregated usage metric into an aggregated usage data store (125); and
transmitting a notification to a user device (114) upon ingesting the aggregated usage metric into the aggregated usage data store (125), wherein the aggregated usage data store (125) enables the user device (114) to access the aggregated usage metric in real-time via a user interface.

2. The apparatus (103) according to any of the preceding claims, wherein the usage data is indicative of a cost of consumption of the at least one artifact by the at least one asset (108A-N, 114).

3. The apparatus (103) according to any of the preceding claims, wherein in aggregating the usage metric based on the usage data ingested into the primary usage data store (124) using the virtual machine instance provisioned, the apparatus (103) in response to execution of the usage management module (122) is configured for:
deploying and executing, on the virtual machine instance, a set of instructions for aggregating the usage metric.

4. The apparatus (103) according to claims 1 and 3, wherein in deploying and executing, on the virtual machine instance, the set of instructions for aggregating the usage metric, the apparatus (103) in response to execution of the usage management module (122) is further configured for:
determining at least one attribute associated corresponding to the usage data; and
identifying the set of instructions to be deployed and executed on the virtual machine instance from a repository, based on the at least one attribute.

5. The apparatus (103) according to claims 1 and 4, wherein the attribute is indicative of at least one of a tenant identifier and an artifact identifier.

6. The apparatus (103) according to claim 1, wherein the virtual machine instance is deprovisioned upon aggregating the usage metric based on the usage data.

7. The apparatus (103) according to any of the preceding claims, wherein in transmitting the notification to the user device upon ingesting the aggregated usage metric into the aggregated usage data store (125), the apparatus (103) in response to execution of the usage management module (122) is further configured for:
receiving a request for accessing the aggregated usage data store (125) from the user interface (114);
authenticating an identity of the tenant based on the received request; and
providing, for the user device (114), access to the aggregated usage metric stored in the aggregated usage data store (125), upon successfully authenticating the identity of the tenant.

8. The apparatus (103) according to any of the preceding claims, the apparatus (103) in response to execution of the usage management module (122) is further configured for:
performing one or more operations for controlling access of the at least one asset (108A-N, 114) to the artifact based on the aggregated usage metric.

9. A system (100) comprising:
a cloud computing system (102);
an apparatus (103) according to any of the claims 1 to 8, communicatively coupled to the cloud computing system (102); and
one or more assets (108A-N, 114) communicatively coupled to the cloud computing system (102), wherein each of the assets (108A-N, 114) is capable of accessing one or more artifacts deployed on the cloud computing system (102).

10. A computer-implemented method for managing usage of artifacts on a cloud computing system by one or more tenants, in real-time, comprising:
detecting, one or more processing units (402), an event associated with at least one asset (108A-N, 114) communicatively coupled to the cloud computing system (102), wherein the event is ingestion of usage data associated with utilization of at least one artifact deployed on the cloud computing system (102) by the asset, into a primary usage data store (124), and wherein the at least one asset (108A-N, 114) is associated with a tenant of the cloud computing system (102);
upon detecting the event, triggering provisioning of a virtual machine instance on the cloud computing system (102);
aggregating a usage metric based on the usage data ingested into the primary usage data store (124) using the virtual machine instance provisioned;
ingesting the aggregated usage metric into an aggregated usage data store (125); and
transmitting a notification to a user device (114) upon ingesting the aggregated usage metric into the aggregated usage data store (125), wherein the aggregated usage data store (125) enables the user device (114) to access the aggregated usage metric in real-time via a user interface.

11. A computer program product comprising instructions which, when executed by the cloud computing system (102) according to the claim 9, cause the cloud computing system (102) to carry out the method according to claim 10.
